# EUROPEAN PATENT SPECIFICATION

(11) **EP 1 313 192 B1**
(45) Date of publication and mention of the grant of the patent: **07.10.2015**
(21) Application number: 02257174.9
(22) Date of filing: 16.10.2002
(51) Int. Cl.: H02G 3/08, H02G 3/04, H02G 7/00

(54) **Cable protection**
Kabelschutz
Protection de cable

(30) Priority: 16.11.2001 GB 0127561; 17.07.2002 GB 0216627
(43) Date of publication of application: 21.05.2003
(73) Proprietor: Kleeneze Sealtech Limited, Bristol BS15 3SS (GB)
(72) Inventor: Love, David Allan, Willsbridge, Bristol BS30 9AD (GB); Gore, Nicholas, Hanham, Bristol BS15 3EZ (GB)
(74) Representative: Faulkner, Thomas John

(56) References cited:
- GB-A- 2 269 835
- US-A- 4 309 072

## Description

This invention relates to the protection of cables running in housings. The invention is particularly applicable to railway system cabling.

Railway system cabling typically runs in concrete ducting besides railway tracks and also passes into and through other housing structures such as junction boxes. There is typically separate cabling provided for a number of different purposes including signalling. A well known problem with such cabling is that rodents, primarily rats, gain access to the interior of the ducting or other housing and chew the cable. The problem is made worse because the rodents are attracted by the heat generated by the cables. Clearly chewing of the cables is undesirable. It can cause delays and cancellations and increase maintenance work. Further, it can be very difficult to determine the location at which a cable has been chewed.

The present invention aims to alleviate the above problems.

GB-A-2269835 describes a roof sealing kit for sealing the eave region gap between the upper edge of a support wall and the adjacent roof of a building. US-A-4309072 describes a protective sheath comprising a plurality of spikes extending radially outward from an outer jacket of a cable so that the cable is protected from gnawing rodents.

According to a first aspect of the present invention there is provided a cable protection system comprising a housing arranged to receive cabling, characterised in that the cable protection system further comprises brush strip positioned within the housing and arranged to deter or prevent a rodent gaining access to cables running in the interior of the housing.

According to a second aspect of the present invention there is provided a method of protecting cable running within a housing characterised in that the method comprises the step of providing, within the housing, brush strip positioned and arranged to deter or prevent a rodent gaining access to cables running in the interior of the housing.

Preferably the brush strip is made of fire retardant materials.

The use of brush strip gives advantages. Besides ease of use and relative cheapness, in general the brush strip will not adversely affect drainage or heat dissipation and the strip can be made with suitable electrical insulation properties.

The brush strip may be positioned and arranged to substantially prevent a rodent gaining access to the interior of the housing.

The housing may comprise ducting. In some cases brush strip might be provided only at the ends of a ducting run and/or at other selected locations. Preferably however, brush strip is provided along substantially the whole length of a ducting run. This is advantageous because ducting inspection lids may be removed or left off and any portion of the ducting may become damaged.

The housing may comprise a junction box in which cables are joined one to another.

In general terms any free space in a housing may be filed with brush strip. Brush strip may be located in the region of a drainage aperture of a housing to deter or prevent a rodent gaining access through the aperture.

The brush strip may be in the form of a helix. Such a helical brush strip may be formed by use of a twisted wire carrier with brush fibres being carried between the twisted wires and projecting helically outwards from the wire carrier. The wire carrier may be of plastic coated, for example polyester coated, wire. The brush fibres may be of polypropylene.

In a number of situations fire retardancy and/or electrical insulation are important properties for the brush strip. The wire carrier may be coated with a flame retardant thermoplastic elastomer. This can help to provide the desirable fire retardant and insulating properties. The brush fibres may be of fire retardant material, flame retardant nylon is particularly preferred.

The method and system are particularly appropriate for use in the protection of railway system cabling, such as signal cabling. The systems and methods may be railway cable protection systems and railway cable protection methods.

According to a third aspect of the present invention there is provided a cable protection brush strip for use in a cable protection method or system as defined above wherein the brush strip is fire retardant.

Embodiments of the invention will now be described, by way of example only, with reference to the accompanying drawings in which:
Figure 1 shows a brush strip of the type which may be used in the present invention;
Figure 2 is a schematic perspective view of a cable protection system including a length of ducting;
Figure 3 is a schematic plan view of the cable protection system shown in Figure 2 but with an inspection cover of the ducting removed; and
Figure 4 is a schematic view of a cable protection system including a junction box.

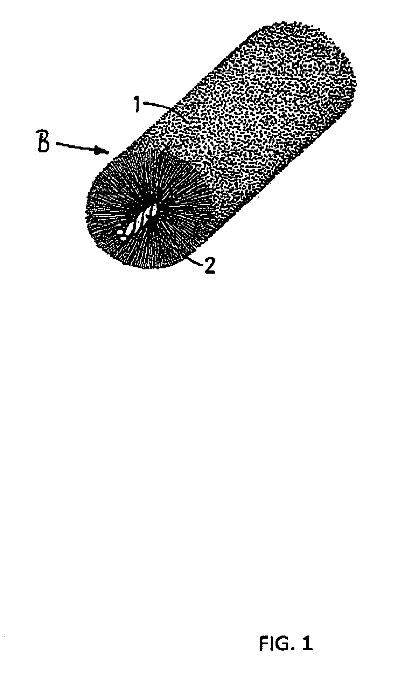

Figure 1 shows a longitudinal, circular cross-section brush strip B comprising a plurality of polypropylene brush fibres 1 carried in a twisted wire carrier 2. The twisted wire carrier 2 comprises a pair of twisted polyester coated wires between which the brush fibres 1 are trapped and caused to adopt a helical arrangement.

Such a brush strip B may be used in a wide variety of void filling situations in carrying out the present invention.

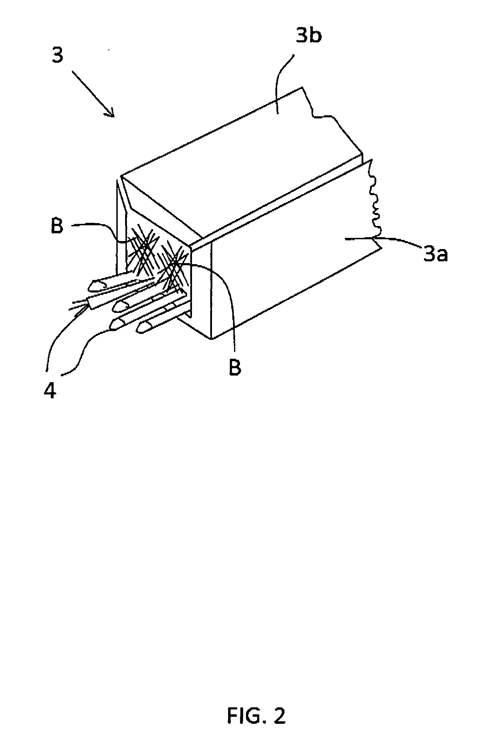

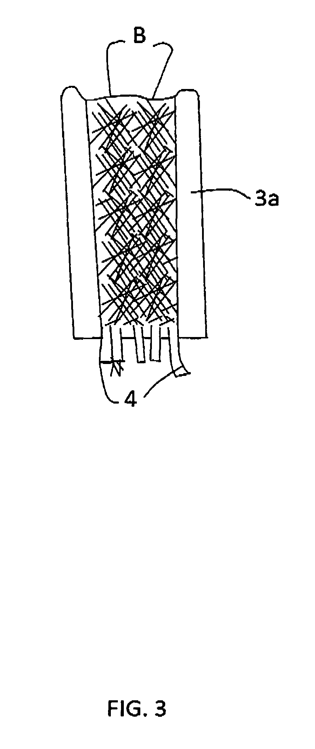

Figures 2 and 3 show one such use. Here a pair of brush strips B are provided side by side in a length of concrete, railway system, trackside ducting 3. The ducting 3 comprises a main body 3a and an inspection cover 3b. As can be seen, cabling 4 runs in the ducting 3 and the strips B are used to fill the remaining space. The bristles or fibres 1 of the strips deform easily when contacting the cabling 4, sidewalls of the ducting main body 3a and the underside of the inspection cover 3b.

The brush strips B may be simply installed by removing the inspection cover 3b and dropping the strips B into place. Similarly the strips B may be removed if access to the cabling 4 is required. Strips B may be provided along the whole length of the ducting system or at key locations as desired.

The presence of the brush strips B effectively prevent a rodent gaining access to the cabling 4. Provided that strips B are provided at all points, this will be true whether the inspection covers 3a are removed temporarily or left off, or the ducting 3 suffers damage.

The strips B will typically be provided in relatively short lengths of say 5m. However, there is little limit to the length that may be supplied and the strips can be easily cut to length if necessary. A typical diameter of the brush strip might be 100mm, but again this can be easily altered to suit needs.

In an alternative, the brush strip B may be wrapped around the cabling 4 in some situations.

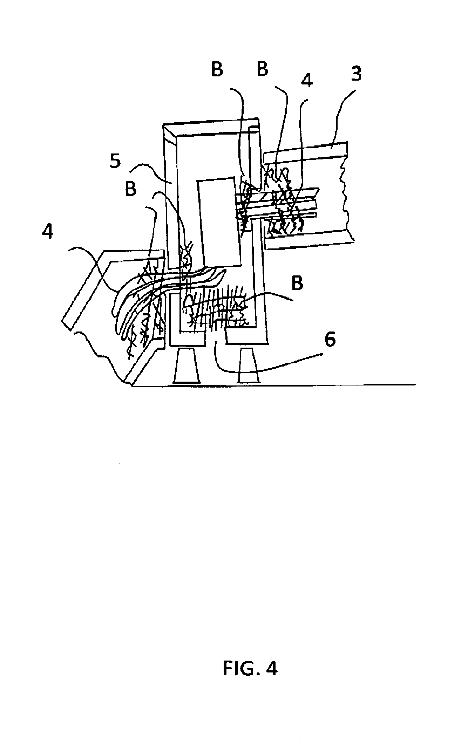

Figure 4 shows a junction box 5 having a drainage aperture 6 located in its bottom surface. Here a brush strip B is provided in the region of the drainage aperture 6 to prevent or deter a rodent gaining access to the cables 4 in the interior of the junction box 5. In this case the strip B is coiled up or scrunched up to fill the desired void. In an alternative, shorter, cut lengths of strip B might be used to fill the void. Brush strip B is also wrapped around the cables 4 where they enter the junction box 5 and trunking 3.

In an important development the electrically insulating and fire retardance properties of the brush strip can be improved.

In a currently preferred strip the brush fibres 1 are formed of a flame retardant nylon, in particular a nylon 6 based on an antimony/halogen mix which meets the UL94V-0 flame retardancy standard. Such fibre may be obtained from Specialty Filaments Ltd (formerly Whiting Europe Limited). At least at sometime this fibre has been marketed under the name WYTEX (RTM) FR. Further, in the currently preferred strip the wire carrier 2 is of steel wire coated with a thermoplastic elastomer (or rubber). Again this material meets the UL-94V-0 flame retardancy standard. A suitable thermoplastic rubber is marketed under the name SANTOPRENE (RTM) by Monsanto.

The wire may be of bright annealed steel. With 1.1 mm, 300-500 Nm wire of this type a coating of the thermoplastic elastomer to give a total diameter of 1.6 mm has been found effective.

Different constructions for the brush strip B might be used, for example, the strip B need not be helically formed - a non-twisted carrier might be used. The materials used in the strip B can be selected to give different properties, for example the wire in the carrier 2 might be chosen to ease deformation (coiling up/scrunching up) of the strip B.

## Claims

1. A cable protection system comprising a housing (3; 3a; 3b; 5) arranged to receive cabling (4), **characterised in that** the cable protection system further comprises: brush strip (B) positioned within the housing (3; 3a; 3b; 5) and arranged to deter or prevent a rodent gaining access to cabling (4) running in the interior of the housing (3; 3a; 3b; 5).

2. A cable protection system according to claim 1 in which the brush strip (B) is fire retardant.

3. A cable protection system according to claim 1 or 2 in which the brush strip (B) comprises a wire carrier (2) which comprises a flame retardant thermoplastic elastomer coating.

4. A cable protection system according to any one of claims 1 to 3 in which the brush strip (B) comprises flame retardant nylon brush fibres (1).

5. A cable protection system according to any preceding claim in which the brush strip (B) is in the form of a helix.

6. A cable protection system according to claim 5 in which the brush strip (B) comprises a twisted wire carrier (2) with brush fibres (1) being carried between the twisted wires and projecting helically outwards from the wire carrier (2).

7. A cable protection system according to any preceding claim in which the brush strip (B) is positioned and arranged to substantially prevent a rodent gaining access to the interior of the housing (3; 3a; 3b; 5).

8. A cable protection system according to any preceding claim in which the housing (3; 3a; 3b; 5) comprises a ducting run and brush strip (B) is provided along substantially the whole length of the ducting run.

9. A cable protection system according to any one of claims 1 to 8 in which the housing (3; 3a; 3b; 5) comprises a junction box (5) in which cables (4) are joined one to another.

10. A cable protection system according to any preceding claim in which the cabling (4) is railway system cabling (4) and the system is a railway cable protection system.

11. A method of protecting cabling (4) running within a housing (3; 3a; 3b; 5) **characterised in that** the method comprises the step of providing, within the housing (3; 3a; 3b; 5), brush strip (B) positioned and arranged to deter or prevent a rodent gaining access to cabling (4) running in the interior of the housing (3; 3a; 3b; 5).

12. A cable protection brush strip (B) for use in a cable protection system, according to claim 1, wherein the brush strip (B) is fire retardant.

## Patentansprüche

1. Kabelschutzsystem, aufweisend ein Gehäuse (3; 3a; 3b; 5), das ausgebildet ist, um eine Verkabelung (4) aufzunehmen, **dadurch gekennzeichnet, dass** das Kabelschutzsystem weiter aufweist: einen Bürstenstreifen (B), der innerhalb des Gehäuses (3; 3a; 3b; 5) positioniert ist und ausgebildet ist, um ein Nagetier davon abzuhalten oder daran zu hindern, Zugang zur Verkabelung (4) zu erlangen, die im Inneren des Gehäuses (3; 3a; 3b; 5) verläuft.

2. Kabelschutzsystem nach Anspruch 1, wobei der Bürstenstreifen (B) feuerhemmend ist.

3. Kabelschutzsystem nach Anspruch 1 oder 2, wobei der Bürstenstreifen (B) einen Drahtträger (2) aufweist, der eine feuerhemmende thermoplastische Elastomerummantelung aufweist.

4. Kabelschutzsystem nach einem der Ansprüche 1 bis 3, wobei der Bürstenstreifen (B) Bürstenfasern (1) aus feuerhemmendem Nylon aufweist.

5. Kabelschutzsystem nach einem der vorhergehenden Ansprüche, wobei der Bürstenstreifen (B) helixförmig ist.

6. Kabelschutzsystem nach Anspruch 5, wobei der Bürstenstreifen (B) einen verdrillten Drahtträger (2) aufweist, wobei die Bürstenfasern (1) zwischen den verdrillten Drähten getragen werden und aus dem Drahtträger (2) helixförmig nach außen vorstehen.

7. Kabelschutzsystem nach einem der vorhergehenden Ansprüche, wobei der Bürstenstreifen (B) positioniert und ausgebildet ist, um ein Nagetier im Wesentlichen daran zu hindern, Zugang zum Inneren des Gehäuses (3; 3a; 3b; 5) zu erlangen.

8. Kabelschutzsystem nach einem der vorhergehenden Ansprüche, wobei das Gehäuse (3; 3a; 3b; 5) einen Leitungskanal aufweist und der Bürstenstreifen (B) entlang im Wesentlichen der gesamten Länge des Leitungskanals vorgesehen ist.

9. Kabelschutzsystem nach einem der Ansprüche 1 bis 8, wobei das Gehäuse (3; 3a; 3b; 5) einen Anschlusskasten (5) aufweist, in dem Kabel (4) miteinander verbunden sind.

10. Kabelschutzsystem nach einem der vorhergehenden Ansprüche, wobei die Verkabelung (4) eine Eisenbahnsystemverkabelung (4) ist und das System ein Eisenbahnkabel-Schutzsystem ist.

11. Verfahren zum Schützen einer Verkabelung (4), die im Inneren eines Gehäuses (3; 3a; 3b; 5) verläuft, **dadurch gekennzeichnet, dass** das Verfahren weiter den Schritt beinhaltet, innerhalb des Gehäuses (3; 3a; 3b; 5) einen Bürstenstreifen (B) vorzusehen, der positioniert und ausgebildet ist, um ein Nagetier davon abzuhalten oder daran zu hindern, Zugang zur Verkabelung (4) zu erlangen, die im Inneren des Gehäuses (3; 3a; 3b; 5) verläuft.

12. Kabelschutz-Bürstenstreifen (B) zur Verwendung in einem Kabelschutzsystem nach Anspruch 1, wobei der Bürstenstreifen (B) feuerhemmend ist.

## Revendications

1. Système de protection de câble comprenant un logement (3 ; 3a ; 3b ; 5) conçu pour recevoir un câblage (4), **caractérisé en ce que** le système de protection de câble comprend en outre : une brosse passe-câble (B) positionnée à l'intérieur du logement (3 ; 3a ; 3b ; 5) et conçue pour prévenir ou empêcher un rongeur d'accéder au câblage (4) en passant à l'intérieur du logement (3 ; 3a ; 3b ; 5).

2. Système de protection de câble selon la revendication 1, dans lequel la brosse passe-câble (B) est ignifuge.

3. Système de protection de câble selon la revendication 1 ou 2, dans lequel la brosse passe-câble (B) comprend un porte-fil (2) qui comprend un revêtement élastomère thermoplastique ignifuge.

4. Système de protection de câble selon l'une quelconque des revendications 1 à 3 dans lequel la brosse passe-câble (B) comprend des fibres de brosse en Nylon ignifuges (1).

5. Système de protection de câble selon l'une des revendications précédentes dans lequel la brosse passe-câble (B) se présente sous la forme d'une hélice.

6. Système de protection de câble selon la revendication 5, dans lequel la brosse passe-câble (B) comprend un porte-fil torsadé (2) avec des fibres de brosse (1) placées entre les fils torsadés et faisant saillie de manière hélicoïdale vers l'extérieur par rapport au porte-fil (2).

7. Système de protection de câble selon l'une quelconque des revendications précédentes dans lequel la brosse passe-câble (B) est positionnée et conçue pour empêcher sensiblement un rongeur d'accéder à l'intérieur du logement (3 ; 3a ; 3b ; 5).

8. Système de protection de câble selon l'une quelconque des revendications précédentes dans lequel le logement (3 ; 3a ; 3b ; 5) comprend un passage de conduits et la brosse passe-câble (B) est disposée sensiblement le long de l'ensemble de la longueur du passage de conduits.

9. Système de protection de câble selon l'une quelconque des revendications 1 à 8, dans lequel le logement (3 ; 3a ; 3b ; 5) comprend une boîte de jonction (5) dans laquelle les câbles (4) sont assemblés les uns aux autres.

10. Système de protection de câble selon l'une quelconque des revendications précédentes dans lequel le câblage (4) est un câblage de réseau ferroviaire (4) et le système est un système de protection de câble ferroviaire.

11. Procédé de protection de câblage (4) passant à l'intérieur d'un logement (3 ; 3a ; 3b ; 5), **caractérisé en ce que** le procédé comprend l'étape de fourniture, à l'intérieur du logement (3 ; 3a ; 3b ; 5), de la brosse passe-câble (B) positionnée et conçue pour prévenir ou empêcher un rongeur d'accéder au câblage (4) en passant à l'intérieur du logement (3 ; 3a ; 3b ; 5).

12. Brosse passe-câble de protection (B) destinée à être utilisée dans un système de protection de câble selon la revendication 1, la brosse passe-câble (B) étant ignifuge.
